(19) Europäisches Patentamt
European Patent Office
Office européen des brevets

(11) Publication number: **0 245 557 B1**

# (12) EUROPEAN PATENT SPECIFICATION

(45) Date of publication of patent specification: **06.03.91**

(51) Int. Cl.5: **C09K 5/00**

(21) Application number: **86308892.8**

(22) Date of filing: **14.11.86**

(54) **Stabilized antifreeze/coolant composition containing borate and silicate corrosion inhibitors.**

(30) Priority: **28.02.86 US 834679**

(43) Date of publication of application:
**19.11.87 Bulletin 87/47**

(45) Publication of the grant of the patent:
**06.03.91 Bulletin 91/10**

(84) Designated Contracting States:
**BE DE FR GB SE**

(56) References cited:
EP-A- 0 027 870
EP-A- 0 111 013
US-A- 3 663 448
US-A- 4 046 707
US-E- 28 553
EP-A- 0 081 738
GB-A- 2 058 120
US-A- 3 948 792
US-A- 4 457 852

(73) Proprietor: **TEXACO DEVELOPMENT CORPORATION**
**2000 Westchester Avenue**
**White Plains, New York 10650(US)**

(72) Inventor: **Darden, Jerome Winn**
**1374 East Hillcrest Drive, 330**
**Thousand Oaks, CA 91360(US)**
Inventor: **Triebel, Carol Ann**
**4312 Speedway No. 109**
**Austin Texas 78751(US)**

(74) Representative: **Wood, Anthony Charles et al**
**Urquhart-Dykes & Lord 91 Wimpole Street**
**London W1M 8AH(GB)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention is directed to antifreeze/coolant concentrate formulations containing alkali metal borate and silicate corrosion inhibitors and precipitation-inhibiting stabilizers, and to aqueous antifreeze/coolant formulations containing alkali metal borate and silicate corrosion inhibitors and precipitation-inhibiting stabilizers. More particularly, this invention relates to alkali metal borate-and silicate-containing water soluble liquid alcohol antifreeze/coolant compositions additionally containing at least one precipitation-inhibiting stabilizer, where said stabilizer is a phosphino polycarboxylic acids and/or the alkali metal salts of said acid. These stabilizers are particularly useful in preventing the precipitation of insoluble alkali earth metal silicate floc materials from antifreeze/coolant formulations containing alkali metal borate and silicate corrosion-inhibiting compounds, where said formulations are diluted with hard water.

Automobile engine cooling systems contain a variety of metals, including copper, solder, brass, steel, cast iron, and aluminum. The possibility of corrosive attack on such metals is high, due to the presence of various ions as well as the high temperatures, pressures, and flow rates found in such cooling systems. The presence of corrosion products within the cooling system can interfere with heat transfer from the engine combustion chambers, and may subsequently cause engine overheating and engine component failure due to excess metal temperatures. To prevent these problems, a variety of organic and inorganic compositions have been employed as corrosion inhibitors in engine antifreeze/coolant formulations, including various borate and silicate compounds. See generally Fay, R. H., "Antifreezes and Deicing Fluids," In: Kirk-Othmer Encyclopedia of Chemical Technology (1978 ed.), vol. 3, pp. 79 -95.

Antifreeze/coolant concentrate formulations are typically diluted with water prior to use in automobile engine cooling systems. However, in many areas only hard water is available to dilute the antifreeze/coolant formulation. Hardness of water is a function of the concentration of dissolved calcium and magnesium salts contained in the water, and is usually expressed in terms of a concentration (ppm) as $CaCO_3$ Total Hardness. Hard water is defined herein as water with greater than 150 ppm as $CaCO_3$ Total Hardness.

It has been observed that the use of hard water to dilute antifreeze/coolant formulation which contain alkali metal silicate and borate corrosion inhibitors causes the formation of insoluble alkali earth metal silicate flocs which precipitate from the antifreeze-water solution. These insoluble silicate flocs are primarily calcium and/or magnesium silicate salts, and have an adverse effect on the antifreeze/coolant formulation and engine cooling system for two reasons. First, since the precipitates are alkali earth metal silicate flocs, a rapid depletion of silicate in solution occurs; thus the corrosion-inhibiting properties of the formulation are depleted. Second, the precipitating solids will scale and eventually plug the passages of the engine cooling system. This will interfere with heat transfer from the engine combustion chambers, and subsequently may cause engine overheating and engine component failure due to excess metal temperatures.

It would thus be advantageous if the precipitation of insoluble alkali earth metal silicate flocs in antifreeze/coolant concentrate formulations containing alkali metal borate and silicate corrosion inhibitors which are diluted with hard water could be controlled or eliminated. It is the object of the instant invention to provide a stabilized antifreeze/coolant concentrate formulation containing alkali metal silicate and borate corrosion inhibitors which will resist the formation and precipitation of such insoluble silicate floc materials when hard water is employed to dilute said antifreeze/coolant concentrate formulations.

The instant invention discloses the use of phosphino polycarboxylic acid/polycarboxylate compositions, or mixtures thereof, as stabilizers to prevent the precipitation of insoluble alkali earth metal silicate floc materials in antifreeze/coolant concentrate formulations containing borate and silicate corrosion inhibitors, where said formulations are diluted with hard water. References which describe uses of similar compounds are as follows:

U.S. Pat. No. 4,387,027 discloses a method of inhibiting corrosion and controlling deposition in iron-containing aqueous systems by the addition of 6-30 ppm a water soluble orthophosphate in combination with 3-25 ppm of a water soluble acrylic acid/salt or a water soluble hydroxy alkylacrylate copolymer;

U.S. Pat. No. 4,333,843 discloses a gellation resistant aqueous glycol composition comprising an effective amount of an alkali metal silicate to reduce corrosion and an effective amount of an organophosphorous-silicon compound

$(RO)_3Si(CH_2)_n$-O-P-(O) $(CH_3)$-OR

wherein R is a $C_1$-$C_4$ alkyl group and n is an integer of 1-4;

U.S. Pat. No. 4,329,243 discloses a cavitation-inhibiting, cooling and/or heat-transfer liquid comprising a glycol, a conventional corrosion inhibitor, and a phosphonic acid which may contain phenylene, a $C_1$-$C_6$ alkylene, or such groups substituted by hydroxy, amino, $PO_3H_2$, or polyamino/polyalkylene groups;

U.S. Pat. No. 4,328,180 discloses a method of inhibiting corrosion and controlling deposition of calciferous scale in cooling water systems by the addition of 0.3-3.0 ppm polyacrylic acid, 0.1-1.0 ppm

tartaric acid, 0.1-2.0 ppm sodium sulfonate dispersant, 0.1-1.0 ppm of a mixture of organic phosphonates, 0.5-3.0 ppm phosphate ester dispersant, 3-40 ppm inorganic phosphate, and 0.1-10 ppm aromatic triazole;

U.S. Pat. No. 4,320,025 discloses a cavitation-inhibiting, non-freezing, cooling and/or heat transfer liquid comprising water, a glycol, and 0.005-0.2 wt.% of at least one phosphono carboxylic acid containing at least two carboxylic acid groups;

U.S. Pat. No. 4,320,023 discloses an antifreeze formulation containing ethylene glycol and 50-500 ppm of an alkylene diphosphonic acid which is useful in retarding precipitation of aluminum corrosion products in engine cooling systems;

U.S. Pat. No. 4,277,359 discloses a scale and corrosion inhibitor for use in aqueous systems comprising a water soluble polyacrylic acid with a molecular weight ranging up to about 2500, a phosphorous acid and its salts, and a carboxylic acid chelate having at least one hydroxyl substituent;

U.S. Pat. No. 4,076,501 discloses a corrosion inhibitor for use in aqueous systems which comprises the use of an aminophosphonic acid, where said aminophosphonic acid contains a $R_1$-N bond, $R_1$ being a straight chain $C_1$-$C_5$ alkyl group, a $C_3$-$C_5$ alkenyl group with the double bond not adjacent to N, a tolyl group, a benzyl group, or a cyclohexyl group;

U.S. Pat. No. 3,960,576 discloses a scale and corrosion inhibitor for use in aqueous systems comprising a water-soluble alkaline oxide silicate, an organic phosphonate, and a carboxy methyl cellulose;

U.S. Pat. No. 3,948,792 discloses a corrosion inhibiting and scale reducing/softening composition for use in automobile and diesel engine coolant systems where a silicate containing anti-corrosion formula is used, comprising the silicate containing anti-corrosion formula in combination with an effective amount of a polymeric dispersant which is a water soluble polycarboxylic acid employed in an amount of 0.1-10 wt. % of the formula, with an average molecular weight in the range of 1,000 - 1,000,000;

U.S. Pat. No. 3,837,803 discloses a corrosion inhibiting composition for use in aqueous systems containing solubilized calcium salts comprising a water soluble organic or inorganic orthophosphate in combination with a water-soluble organophosphonic acid or salt thereof;

U.S. Pat. No. 3,663,448 discloses a composition useful for inhibiting alkaline earth metal scale deposition in aqueous systems comprising about one part by weight of an aminophosphonate, and from about 0.5 to 5 parts by weight of a water soluble polyacrylic acid or polyacrylamide having a molecular weight in the range of 500-12,000; and

API Oilfield Chemicals Abstract, vol. 29, paragraph F1173 (Oct. 1982) describes German Patent DE 3,044,214, which discloses the use of a phosphono-polycarboxylic acid containing unsaturated monocarboxylic and dicarboxylic acid units for use in aqueous systems to inhibit inorganic material scale formation and precipitation.

The instant invention is directed to a novel precipitation-resistant antifreeze/coolant concentrate composition containing alkali metal silicate and borate corrosion inhibitors, and to aqueous antifreeze/coolant compositions where said concentrate is diluted with hard water (defined herein as water of greater than 150 ppm as $CaCO_3$ Total Hardness). It has been discovered that the stabilized and corrosion-inhibited antifreeze/coolant concentrate of the instant invention, when diluted with hard water, remains a stable composition in which the precipitation of insoluble alkali earth metal silicate floc material detrimental to the cooling systems of internal combustion engines is inhibited.

The antifreeze/coolant concentrate composition of the instant invention comprises 80-99 wt.%, preferably 90-99 wt.% of a water soluble liquid alcohol freezing point depressant, preferably ethylene glycol, 0.1-10.0 wt.%, preferably 0.5-5.0 wt.% of an alkali metal borate corrosion inhibitor such as sodium metaborate pentahydrate, 0.1-1.0 wt.%, preferably 0.15-0.5 wt.% of an alkali metal silicate corrosion inhibitor such as sodium metasilicate pentahydrate, and 100-10,000 ppm, preferably 100-5000 ppm of at least one precipitation-inhibiting stabilizer which is a phosphino polycarboxylic acid and/or alkali metal phosphino polycarboxylate salt or a mixture thereof, said phosphino polycarboxylic acid having a molecular weight range of 200 to 2000, preferably 3000 to 1500, and having the formula

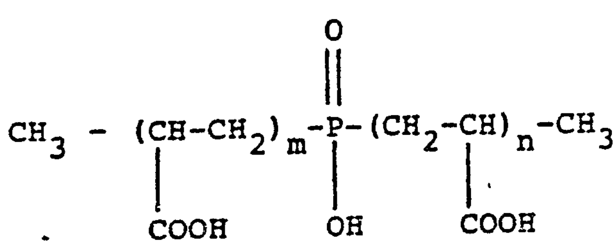

wherein m + n has a value from 2 to 20, preferably from 4 to 16.

The invention also comprises a method of treating an anti-freeze concentrate composition to reduce precipitation when the concentrate is mixed with hard water, said concentrate composition comprising from 80 to 99 weight percent of the freezing point depressant, from 0.1 to 10 weight percent of an borate corrosion inhibitor, and 0.1 to 1 weight percent of an alkali metal silicate corrosion inhibitor, which method is characterised by adding to said concentrate, before or after admixture with hard water, from 100 to 10,000 ppm of at least one precipitation-inhibiting stabilizer.

The liquid alcohol freezing point depressant component of the above-described antifreeze/coolant concentrate composition may be a glycol or glycol ether. The glycol ethers which may be employed as major components in the instant invention include glycols such as ethylene glycol, diethylene glycol, propylene glycol, dipropylene glycol, and glycol monoethers such as the methyl, ethyl, propyl, and butyl ethers of ethylene glycol, diethylene glycol, propylene glycol, and dipropylene glycol. The liquid alcohol freezing point depressant component may be employed in concentrations of 80% to 99% by weight, preferably 90% to 99% by weight. Ethylene glycol is particularly preferred as the liquid alcohol freezing point depressant component.

The alkali metal borate corrosion-inhibiting component of the above-described antifreeze/coolant concentrate composition may be any alkali metal borate compound employed in admixture with the above-described liquid alcohol freezing point depressant. The alkali metal borate corrosion-inhibiting component may be employed in concentrations of 0.1 - 10.0 wt. %, preferably 0.5-5.0 wt.%. Sodium metaborate pentahydrate is particularly preferred.

The corrosion-inhibiting silicate component of the above-described antifreeze/coolant concentrate composition may be any alkali metal silicate compound employed in admixture with the above-described liquid alcohol freezing point depressant. The alkali metal silicate corrosion-inhibiting component may be employed in concentrations of 0.1-1.0 wt.%, preferably 0.15-0.5 wt.%. Sodium metasilicate pentahydrate is particularly preferred. Organosilane silicate stabilizers may additionally be employed in concentrations of 0.01-1.0 wt.%.

The phosphino polycarboxylic acid component of the above-described antifreeze/coolant composition may be represented by the formula:

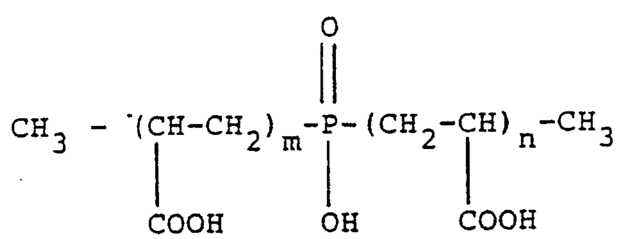

where m + n has a value from about 2-20, preferably from about 4-16. Molecular weights for said phosphino polycarboxylic acid are in the range of 200-2000, preferably 300-1500. Alkali metal phosphino polycarboxylates derived from the above-described phosphino polycarboxylic acid may also be employed in the antifreeze/coolant composition of the instant invention. Sodium phosphino polycarboxylates are particularly preferred. Said acids and/or salts may be present in a concentration range of 100-10,000 ppm, preferably 100-5000 ppm. Phosphino polycarboxylic acids and polycarboxylates suitable for use include those commercially available from Ciba-Geigy Corp. under the Belsperse and Belclene series trade names, such as Belsperse 161 and Belclene 500.

A preferred additional corrosion inhibitor for use in the instant invention is a hydrocarbyl azole, preferably an aromatic triazole or alkyl-substituted aromatic triazole, such as benzotriazole or tolytriazole, or a thiazole such as sodium mercaptobenzothiazole. The most preferred azole for use is tolyltriazole. The approximate concentration of the hydrocarbyl azole component which may be employed in the antifreeze/coolant composition of the instant invention is about 0.1 to 0.5 wt. %, preferably about 0.1 to 0.3 wt. %.

One or more conventional corrosion inhibitors may also be employed in the above-described antifreeze/coolant formulation. Such conventional corrosion inhibitors may be employed at concentrations of 0.01-5.0 wt. %, and may be selected from the group comprising: alkali metal hydroxides, alkali metal benzoates, alkali metal nitrates, alkali metal nitrites, and alkali metal molybdates.

In one embodiment of the instant invention, the above-described antifreeze/coolant concentrate composition is diluted with 10% to 90%, preferably 25% to 75% by weight of hard water, defined herein as water with a concentration of greater than 150 ppm as $CaCO_3$ Total Hardness. The stabilizer component of the above-described antifreeze/coolant composition acts to prevent the silicate corrosion inhibitor contained within the aqueous antifreeze/coolant formulation from forming an insoluble precipitate with alkali earth

metal ions (particularly calcium or magnesium ions) introduced into the antifreeze coolant composition via the hard water.

The method of the instant invention will be further illustrated by the following examples, which are not intended to limit the invention, but rather to illuminate it.

EXAMPLE 1

An antifreeze concentrate formulation was prepared comprising 94.2 wt.% ethylene glycol, 1.0 wt.% sodium metaborate pentahydrate, 0.47 wt.% of a 50% aqueous solution of sodium hydroxide, 2.0 wt.% of sodium benzoate, .04 wt.% sodium metasilicate pentahydrate, 0.2 wt.% sodium molybdate dihydrate, 0.03 wt.% of an organosilane silicate stabilizer, 0.1 wt.% tolyltriazole, 0.2 wt.% of a 50% aqueous solution of sodium mercaptobenzothiazole, and 1.4 wt.% water.

EXAMPLE 2

To the antifreeze concentrate formulation of Example 1, 5000 ppm of a phosphino polycarboxylic acid stabilizer of approximate molecular weight 350 (Belclene 500) was added.

EXAMPLE 3

To the antifreeze concentrate formulation of Example 1, 3000 ppm of a phosphino polycarboxylic acid stabilizer of approximate molecular weight 1200 (Belsperse 161) was added.

Examples 1-3 were tested for their stability after dilution with hard water by employing Hard Water Compatibility Test A, described as follows: 100 ml of the antifreeze concentrate to be tested was placed in a 250 ml beaker together with 100 ml of hard water of about 250 ppm as $CaCO_3$ Total Hardness. This mixture was heated to 90° C for ten minutes, then cooled to room temperature and stored in a dark cabinet for 7 days. Thereafter, any alkali earth metal silicate floc which had precipitated from solution was removed by filtration. A sample of the filtered coolant and a preliminary sample of the coolant obtained prior to the test were both submitted for atomic absorption analysis to determine the percentage of silicate left in solution after the test was completed. Table I sets forth the results of Hard Water Compatibility Test A for Examples 1-5.

TABLE I

RESULTS OF HARD WATER COMPATIBILITY TEST A

| Example | Stabilizer Additive (ppm) | % Silicate In Solution After Test |
|---|---|---|
| 1 | None | 60.2 |
| 2 | Phosphino polycarboxylic acid [M.W. = 350] (5000) | 100 |
| 3 | Phosphino polycarboxylic acid [M.W. = 1200] (3000) | 100 |

As illustrated in Table I, the antifreeze concentrate formulation of Example 1 retained only 60.2% of the original silicate corrosion inhibitor in solution after dilution with hard water of about 250 ppm as $CaCO_3$ Total Hardness. However, the stabilized antifreeze concentrate formulations of the instant invention, as exemplified by Examples 2-5, retained 100% of the original silicate corrosion inhibitor in solution after dilution with the same hard water. Examples 2-5 thus indicate the superiority of the antifreeze concentrate formulations of the instant invention in terms of their resistance to alkali earth metal silicate floc precipitation after dilution with hard water.

Note that in the above described examples of the instant invention, the presence of additional corrosion inhibitors such as sodium hydroxide, sodium benzoate, sodium molybdate, tolyltriazole, and sodium mercaptobenzothiazole did not inhibit the stabilizing effect of phosphino polycarboxylic acid/polycarboxylate stabilizers in the hard water-diluted antifreeze/coolant compositions.

## Claims

1. An antifreeze concentrate composition comprising from 80 to 99 weight percent of a water soluble liquid alcohol freezing point depressant, from 0.1 to 10 weight percent of an alkali metal borate corrosion inhibitor and 0.1 to 1 weight percent of an alkali metal silicate corrosion inhibitor; characterised in that the composition contains from 10 to 100 ppm of at least one precipitation-inhibiting stabilizer which is a phosphine polycarboxylic acid and/or alkali metal phosphino polycarboxylate salt or a mixture thereof having the formula

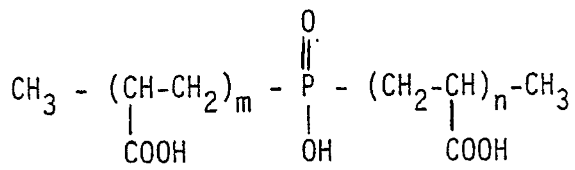

where m + n has a value from 2 to 20 and the molecular weight lies in the range from 200 to 2000.

2. An anti-freeze concentrate composition according to Claim 1, characterised in that the precipitation-inhibiting stabilizer is a phosphino polycarboxylic acid or an alkali metal phosphino polycarboxylate having a molecular weight in the range from 300 to 1500, having m + n in the range 4 to 16 and employed at a concentration from 100 to 5000 ppm.

3. The anti-freeze concentrate composition according to Claim 1 or 2 characterised in that the concentrate contains from 0.1 to 0.3 weight percent of a hydrocarbyl azole corrosion inhibitor.

4. The anti-freeze concentrate composition according to any one of Claims 1 to 3 characterised in that the concentrate contains from 0.1 to 5 weight percent of an alkali metal hydroxide, benzoate, nitrate, nitrite and/or molybdate as an additional corrosion inhibitor.

5. The anti-freeze concentrate composition according to any one of Claims 1 to 4 characterised in that the concentrate contains from 0.01 to 1 weight percent of an organosilane silicate stabilizer.

6. The anti-freeze concentrate composition according to any one of Claims 1 to 5 characterised in that the alkali metal borate corrosion inhibitor is sodium metaborate pentahydrate at a concentration from 0.5 to 5 weight percent.

7. The anti-freeze concentrate composition according to any one of Claims 1 to 6 characterised in that the alkali metal silicate corrosion inhibitor is sodium metasilicate pentahydrate at a concentration from 0.15 to 0.5 weight percent.

8. A method of treating an anti-freeze concentrate composition to reduce precipitation when the concentrate is mixed with hard water, said concentration composition comprising from 80 to 99 weight percent of the freezing point depressant, from 0.1 to 10 weight percent of an alkali metal borate corrosion inhibitor, and 0.1 to 1 weight percent of an alkali metal silicate corrosion inhibitor, which method is characterised by adding to said concentrate, before or after admixture with hard water, from 100 to 10,000 ppm of at least one precipitation-inhibiting stabilizer which is a phosphine polycarboxylic acid and/or alkali metal phosphine polycarboxylate salt or a mixture thereof, having the formula

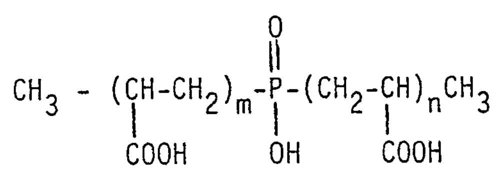

where m + n has a value from 2 to 20 and the molecular weight lies in the range from 200 to 2000.

## Revendications

1. Composition de concentré antigel comprenant de 80 à 99% en poids d'un abaisseur de point de congélation d'alcool liquide soluble dans l'eau, de 0,1 à 10% en poids d'un inhibiteur de corrosion de borate de métal alcalin et de 0,1 à 1% en poids d'un inhibiteur de corrosion de silicate de metal alcalin, caractérisée en ce que la composition contient de 10 à 100 ppm d'au moins un stabilisant inhibiteur de précipitation, qui est un acide phosphino polycarboxylique et/ou sel de phosphino polycarboxylate de métal alcalin ou un mélange de ceux-ci, répondant à la formule:

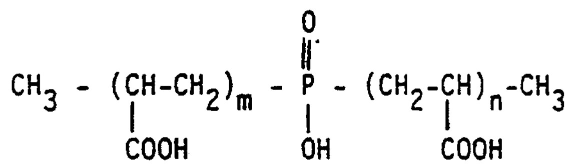

dans laquelle m + n a une valeur de 2 à 20 et le poids moléculaire se situe dans la gamme de 200 à 2000.

2. Composition de concentré antigel suivant la revendication 1, caractérisée en ce que le stabilisant inhibiteur de précipitation est un acide phosphino polycarboxylique ou un phosphino polycarboxylate de métal alcalin ayant un poids moléculaire dans la gamme de 300 à 1500, dont la somme m + n est dans la gamme de 4 à 16 et utilisé à une concentration de 100 à 5000 ppm.

3. Composition de concentré antigel suivant l'une ou l'autre des revendications 1 et 2, caractérisée en ce que le concentré contient de 0,1 à 0,3 en poids d'un inhibiteur de corrosion d'hydrocarbyl azole.

4. Composition de concentré antigel suivant l'une quelconque des revendications 1 à 3, caractérisée en ce que le concentré contient de 0,1 à 5% en poids d'un hydroxyde, benzoate, nitrate, nitrite et/ou molybdate de métal alcalin comme inhibiteur de corrosion supplémentaire.

5. Composition de concentré antigel suivant l'une quelconque des revendications 1 à 4, caractérisée en ce que le concentré contient de 0,01 à 1 en poids d'un stabilisant de silicate d'organosilane.

6. Composition de concentré antigel suivant l'une quelconque des revendications 1 à 5, caractérisée en ce que l'inhibiteur de corrosion de borate de métal alcalin est le pentahydrate de métaborate de sodium à une concentration de 0,5 à 5% en poids.

7. Composition de concentré antigel suivant l'une quelconque des revendications 1 à 6, caractérisée en ce que l'inhibiteur de corrosion de silicate de métal alcalin est le pentahydrate de métasilicate de sodium à une concentration de 0,15 à 0,5% en poids.

8. Méthode de traitement d'une composition de concentré antigel pour réduire la précipitation lorsque le concentré est mélangé à de l'eau dure, cette composition de concentration comprenant de 80 à 99% en poids de l'abaisseur de point de congélation, de 0,1 à 10% en poids d'un inhibiteur de corrosion de borate de métal alcalin et de 0,1 à 1% en poids d'un inhibiteur de corrosion de silicate de métal alcalin, cette méthode étant caractérisée en ce que l'on ajoute au concentré, avant ou après le mélange à l'eau dure, de 100 à 10000 ppm d'au moins un stabilisant inhibiteur de précipitation, qui est un acide phosphino polycarboxylique et/ou sel de phosphino polycarboxylate de métal alcalin ou un mélange de ceux-ci, répondant à la formule:

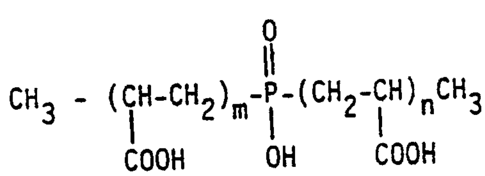

dans laquelle m + n a une valeur de 2 à 20 et le poids moléculaire se situe dans la gamme de 200 à 2000.

## Ansprüche

1. Konzentriertes Frostschutzmittel, das von 80 bis 99 Gew.-% eines wasserlöslichen Gefrierpunktserniedrigungsmittels auf der Basis von flüssigem Alkohol, von 0,1 bis 10 Gew.-% eines Korrosionsinhibitors auf der Basis eines Alkalimetallborats und 0,1 bis 1 Gew.-% eines Korrosionsinhibitors auf der Basis eines Alkalimetallsilikats umfaßt; dadurch gekennzeichnet, daß das Mittel von 10 bis 100 ppm wenigstens eines niederschlaginhibierenden Stabilisators enthält, der eine Phosphinopolycarbonsäure und/oder ein Alkalimetall-Phosphinopolycarboxylatsalz oder eine Mischung derselben ist, mit der Formel

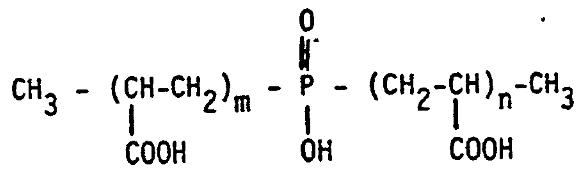

in der m + n einen Wert von 2 bis 20 besitzt und das Molekulargewicht im Bereich von 200 bis 2000 liegt.

2. Konzentriertes Frostschutzmittel nach Anspruch 1, dadurch gekennzeichnet, daß der niederschlaginhibierende Stabilisator eine Phosphinopolycarbonsäure und ein Alkalimetall-Phosphinopolycarboxylat ist, die (das) ein Molekulargewicht im Bereich von 300 bis 1500 besitzt, m + n im Bereich von 4 bis 16 besitzt und bei einer Konzentration von 100 bis 500 ppm eingesetzt wird.

3. Konzentriertes Frostschutzmittel nach Anspruch 1 oder 2, dadurch gekennzeichnet, daß das Konzentrat von 0,1 bis 0,3 Gew.-% eines Korrosionsinhibitors auf der Basis eines Hydrocarbylazols enthält.

4. Konzentriertes Frostschutzmittel nach einem der Ansprüche 1 bis 3, dadurch gekennzeichnet, daß das Konzentrat von 0,1 bis 5 Gew.-% eines Alkalimetallhydroxids, -benzoats, -nitrats, -nitrits und/oder -molybdats als einen zusätzlichen Korrosionsinhibitor enthält.

5. Konzentriertes Frostschutzmittel nach einem der Ansprüche 1 bis 4, dadurch gekennzeichnet, daß das Konzentrat von 0,01 bis 1 Gew.-% eines Stabilisators auf der Basis eines Organosilansilikats enthält.

6. Konzentriertes Frostschutzmittel nach einem der Ansprüche 1 bis 5, dadurch gekennzeichnet, daß der Korrosionsinhibitor auf der Basis des Alkalimetallborats Natriummetaborat-Pentahydrat bei einer Konzentration von 0,5 bis 5 Gew.-% ist.

7. Konzentriertes Frostschutzmittel nach einem der Ansprüche 1 bis 6, dadurch gekennzeichnet, daß der Korrosionsinhibitor auf der Basis des Alkalimetallsilikats NatriummetasilikatPentahydrat bei einer Konzentration von 0,15 bis 0,5 Gew.-% ist.

8. Verfahren zum Behandeln eines konzentrierten Frostschutzmittels, um Niederschlag zu verringern, wenn das Konzentrat mit hartem Wasser vermischt wird, wobei besagtes konzentriertes Mittel von 80 bis 99 Gew.-% des Gefrierpunktserniedrigungsmittels, von 0,1 bis 10 Gew.-% eines Korrosionsinhibitors auf der Basis eines Alkalimetallborats und 0,1 bis 1 Gew.-% eines Korrosionsinhibitors auf der Basis eines Alkalimetallsilikats umfaßt, wobei das Verfahren gekennzeichnet ist durch Hinzufügen von 100 bis 10.000 ppm wenigstens eines niederschlagsinhibierenden Stabilisators zu besagtem Konzentrat, vor oder nach der Vermischung mit hartem Wasser, der eine Phosphinopolycarbonsäure und/oder ein Alkalimetall-Phosphinopolycarboxylatsalz oder ein Gemisch derselben ist, mit der Formel

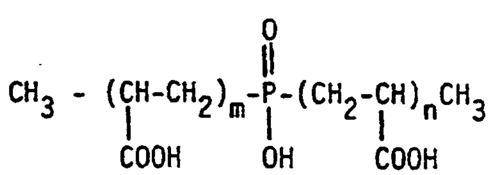

in der m + n einen Wert von 2 bis 20 besitzt und das Molekulargewicht im Bereich von 200 bis 2000 liegt.